# EUROPEAN PATENT SPECIFICATION

(11) **EP 0 252 632 B1**
(45) Date of publication and mention of the grant of the patent: **31.08.1994**
(21) Application number: 87305440.7
(22) Date of filing: 19.06.1987
(51) Int. Cl.: B01L 3/00, G01N 35/08

(54) **Reagent cartridge**
Reagenzkassette
Cartouche de réactifs

(30) Priority: 11.07.1986 US 884465
(43) Date of publication of application: 13.01.1988
(73) Proprietor: BECKMAN INSTRUMENTS, INC., Fullerton California 92634 (US)
(72) Inventor: Fechtner, Harold F., Claremont, CA 91711 (US)
(74) Representative: Ede, Eric

(56) References cited:
- EP-A- 0 216 026
- EP-A- 0 217 000
- EP-A- 0 223 002
- US-A- 3 582 285
- US-A- 3 713 985

## Description

### Field of the Invention

The present invention relates generally to the field of automated clinical chemistry analyzers and more particularly to the storage and transportation of reagents within such analyzers.

### Background of the Invention

A number of special purpose analyzers are available for the measurement of various analytes in human body fluid samples. In the past, such analyzers were often adapted to test for a single analyte in a patient sample and may have required extensive operator actions to perform an analysis. For example, the operator might be required to perform manual pipetting of patient sample and reagents into a test chamber or cuvette, manual timing of the reaction, and the manual reading of an abitrary value from the analyzer that is then compared to previously generated calibration values to obtain a final result. As is readily apparent, largely manually operated analyzers are not suitable for either a large number of patient sample analyses or for performing an analysis in a limited amount of time.

In order to meet the increasing demand for the routine testing of a growing number of analytes as well as for the reduction in overall testing costs and the skill required of the technician/operator, several analyzers are, currently available which are partially or fully automated. A typical automated analyzer can analyze a single fluid sample for a plurality of analytes with little or no intervention on the part of an operator.

The number of different analytes or chemistries that an automated clinical analyzer can analyze is often termed the "menu" of chemistries available on the analyzer. An automated analyzer may be designed, for example, to analyze a limited menu of basic chemistries that represent the bulk of the work load in a clinical chemistry laboratory, such as glucose, creatinine, sodium, potassium and the like. On the other hand, other analyzers may offer a much larger menu, sometimes ranging up to 50 or 60 different chemistries. Many of such chemistries may represent relatively low volume chemistries, that is, ones that are required on an infrequent basis as compared to the basic chemistries mentioned above.

Each chemistry run on an analyzer generally requires its own unique reagent or combination of reagents. Although it would be desirable to maintain all of the reagents on the analyzer for each of the chemistries on the menu, most large menu analyzers do not have the storage capacity to do so. Instead, reagents for a subset of the menu are stored on the analyzer at one time. When an analysis is to be run that requires reagents that are not presently stored on board the analyzer, the reagents must be placed onto the analyzer before the analysis is run. If the reagent storage area on analyzer is already full, then reagents for a chemistry not in use are removed and the reagents for the new chemistry are installed in their place. With such an approach, it is desirable that the analyzer maintain as many reagents on board as possible and, further, that reagents be easily removed and replaced so that analyzer down time and operator time can both be minimized.

It is known in the art to use reagent cartridges on automated clinical analyzers to increase the ease with which reagents are handled and decrease the time required to reconfigure the chemistries on board the analyzer. Such cartridges may contain all of the various reagents required for a particular chemistry and may be configured to fit onto a reagent storage rack or wheel within the analyzer.

An example of this type of cartridge is used on the Spectrum™ analyzer manufactured by the Diagnostic Division of Abbott Laboratories in Irving, Texas. The Spectrum analyzer employs a molded plastic reagent cartridge generally in the form of a truncated wedge and containing several chambers for the various reagents required for a chemistry. The reagent cartridge fits into an annular well within a reagent storage wheel on the analyzer and each cartridge is accessed by one or more automatic, probes that dip into the cartridge chambers.

The reagent cartridge used on the Spectrum analyzer, however, has several disadvantages which are characteristic of reagent cartridges for automated analyzers. The Spectrum analyzer reagent cartridge has integrally formed common walls between the adjacent reagent chambers. It is believed by Applicant herein that reagents stored in adjacent chambers tend to become contaminated due to migration of the reagents through the common chamber walls. Reagent migration is a problem that has been heretofore unrecognized in the art. It is important because contaminated reagents can give spurious test results which may be life threatening. Reagent migration can also decrease the storage life of the reagents, thus increasing analyzer operating costs. The increased operating costs are particularly apparent where the reagents stored in a cartridge are used infrequently and must be stored for a relatively long period of time until consumed.

From an operator's standpoint, the Spectrum analyzer reagent cartridge is difficult to remove from the instrument. Although the cartridge must be lifted upwardly from the storage wheel, the cartridge provides no convenient means by which it may be grasped from above.

Further, the cartridge and the wheel which receives the cartridge provide no sure indication that the cartridge is properly seated in the wheel. Thus, a misaligned cartridge or debris in the storage wheel can cause improper indexing between the cartridge and the wheel. Since the cartridges are each accessed by automatic probes inserted a predetermined distance into the cartridges, inadequate or improper indexing may result in a collision between the probe tip and the bottom of the cartridge. Although such collisions can be avoided by decreasing the insertion depth of the probe into the cartridge, the resulting distance between the inserted probe tip and the bottom of the cartridge causes unused reagent to be left in the cartridge, further decreasing the cost effectiveness of the automated analyzer. Also, a misaligned cartridge may incorrectly access openings with respect to the probe, causing the probe to impact the cartridge and damaging both the probe and cartridge.

Also, the Spectrum analyzer cartridge have been assembled using what is believed to have been ultrasonic welding which may not form a sure, uniform seam. The result is a cartridge which is costly to manufacture and which has a tendency to leak.

### Summary of the Invention

A reagent cartridge in accordance with the present invention overcomes the limitations and disadvantages described above. Such a cartridge comprises a plurality of storage compartments and connecting members holding the storage compartments in a fixed relationship with respect to each other and separating the walls of the compartments from each other *characterized in that* the cartridge has a bottom wall, and the cartridge includes access openings for each of the storage compartments, and a plurality of corresponding necks extending upwardly from the storage compartments, and support means provided in a support plane extending above the top of the storage compartments and within the extent of the necks, said plane being defined a predetermined distance from the bottom wall, the support means being adapted to cooperate slidingly with suspension means external to the cartridge thereby to suspend the cartridge. Wall members of each storage compartment are distinct and separated from the wall members for the other storage compartments in the cartridge, thus eliminating the reagent migration problem discussed above. The connecting members may take the form of members at the top and bottom of the cartridge.

Further according to the present invention there is provided a method for making the above clinical reagent cartridge comprising the steps of:
forming a body of the reagent cartridge from a thermo plastic including all but one essentially flat wall of the reagent cartridge;
forming a closing member of the reagent cartridge from a thermo plastic, the closing member including essentially flat surfaces adapted to be welded to the body to form the complete reagent cartridge;
pressing the body and closing member against a plate heated to an elevated temperature to render plastic the portions of the body and closing member in contact with the plate;
removing the plate;
and pressing the heated portions of the body and closing member together to form a weld therebetween.

The present invention also provides a clinical instrument comprising a reagent cartridge storage apparatus including parallel rails adapted to support the reagent cartridge of the invention, the said rails being preferably adapted to receive a projecting tooth on the support means for retaining the reagent cartridge.

By virtue of this invention a reagent cartridge is mounted in a clinical instrument as referred to above by a method characterised by sliding the cartridge into suspension means on a carousel whereby the cartridge is maintained in a suspended manner.

Each of the storage compartments (of the embodiment to be described herein below) includes an access opening comprising a neck and a collar formed on the neck. The collar is spaced from each storage compartment bottom wall by a predetermined distance which is adapted to accommodate the insertion depth of a reagent transfer probe. Thus, the reagent cartridge provides a sure and repeatable indexing mechanism which, prevents collisions between the probe tip and the cartridge yet allows efficient utilization of reagent stored within the cartridge.

The collars are adapted to be received by parallel rails included in a reagent storage area of a clinical instrument upon which the cartridge is used. The parallel raids include depressions and the reagent cartridge includes a raised body having teeth adapted to be received in the depressions. The teeth and depressions together form a detent mechanism which positively indexes and retains the cartridge on the parallel rails yet allows the cartridge to be easily inserted into and removed from the reagent storage area. Where the reagent storage area is in the form of a rotatable wheel or carousel about which reagent cartridges are disposed, the detent mechanism is particularly useful to retain a cartridge positively on the parallel rails as the wheel or carousel is rotated. The bottom of the cartridge may also include internal depressions aligned with the access openings to provide further insertion clearance for the probe tip when the probe is inserted into the cartridge.

In the embodiment disclosed herein, the reagent cartridge is formed in two parts, a body and a closing member. The body and closing member are pressed against a plate heated to an elevated temperature which renders plastic the portions of the body and closing member in contact with the plate. The plate is removed and the body and closing member are pressed together to form a uniform weld therebetween. This technique overcomes the difficulties and drawbacks associated with ultrasonic welding of reagent cartridges as is described above.

### Description of the Drawings

Figure 1 is a perspective view of a reagent cartridge in accordance with the present invention.

Figure 2 is a cross-sectional view of the reagent cartridge of Figure 1 taken along plane 2-2 thereof.

Figure 3 is a cross-sectional view of the reagent cartridge of Figure 1 taken along plane 3-3 thereof.

Figure 4 is a cross-sectional view of the reagent cartridge of Figure 1 taken across plane 4-4 thereof.

Figure 5 is a bottom view of the reagent cartridge of Figure 1.

Figure 5A is a cross-section detail view of typical mating areas between the body and bottom member of the reagent cartridge of Figure 1.

Figure 6 is a side view of the body and bottom member of the reagent cartridge and a plate used to weld such elements together.

Figure 7 is a top view of a portion of a reagent cartridge carousel adapted to receive the reagent cartridge of Figure 1.

Figure 8 is a cross-sectional view of the carousel of Figure 7 taken along line 8-8 thereof.

### Detailed Description

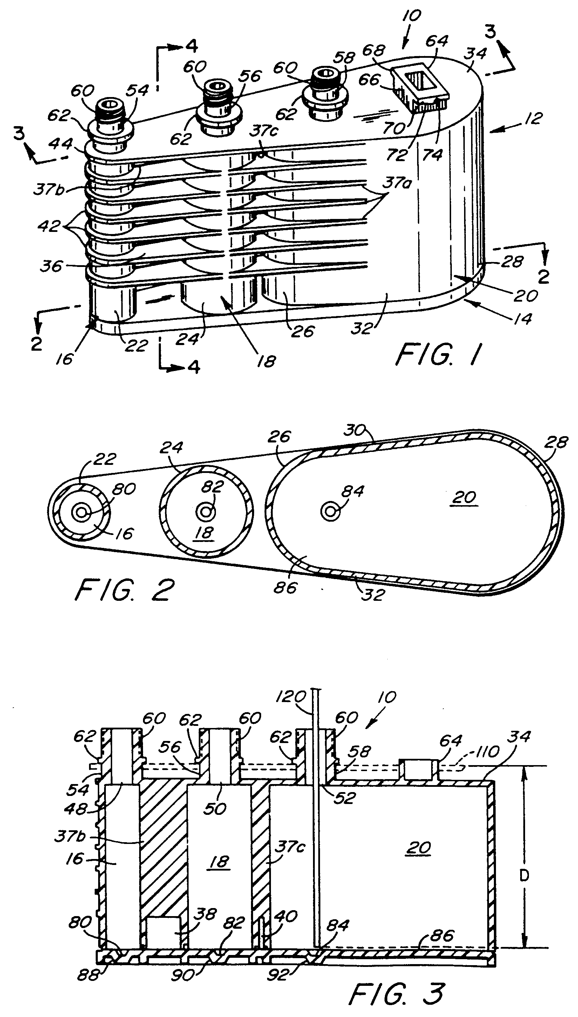

With reference to Figure 1, a reagent cartridge 10 in accordance with the present invention comprises an upper integrally molded body 12 and a molded bottom member 14. The body 12 and bottom member 14 are welded together as is described hereinbelow to form the completed reagent cartridge 10. The body 12 is formed to define three reagent storage compartments 16, 18 and 20, each adapted to receive and hold reagents for use in a clinical assay. In the embodiment disclosed herein, the volumes of the compartments 16, 18 and 20 are about 5 ml, 25 ml and 125 ml, respectively. Each of the storage compartments 16 and 18 are defined with generally cylindrical side walls 22 and 24, respectively as seen in Figure 2. The third storage compartment 20 includes side walls generally defined by semicircular end portions 26 and 28 connected by straight wall members 30 and 32.

The body 12 includes a top 34 [Figures 1 and 3) which forms the top wall of each of the storage compartments 16, 18 and 20. The top 34 connects and spaces the storage compartments 16, 18 and 20 such that the side walls for the storage compartments 16, 18 and 20 are separated and none of the storage compartments 16, 18 or 20 share a common side wall.

A plurality of webs 36 [Figures 1, 3 and 4) join the storage compartments 16, 18 and 20 and provide rigidity to the body 12. In the embodiment disclosed herein, the webs 36 comprise six horizontal web members 37a and two vertical web members 37b and 37c between the compartments 16, 18 and 18, 20, respectively. Each of the two vertical web members 37b and 37c terminate near the bottom member 14, defining rectangular openings 38 and 40 therethrough: Outer edges 42 of the horizontal web members 37a are of the same general peripheral outline as an outer edge 44 of the top 34 beginning in the vicinity of the end portion 26 and extending about the storage compartment 16. It will be recognized that the webs 36 may be replaced by other suitable structural means such as solid external walls, ribs, or other structural members arranged in various geometric configurations, all of which are useful for connecting the outer peripheries of the compartments 16, 18 and 20 while still maintaining suitable distance and thus isolation between the reagents stored in each of the compartments 16, 18 and 20. Also, the number of the horizontal webs may be varied from the six disclosed herein, or may be eliminated altogether, relying only on the top 34 and the bottom member 14 to hold the compartments 16, 18, and 20 in place without affecting the physical integrity of the cartridge 10.

With reference to Figures 1 and 3, the body 12 includes openings 48, 50 and 52 formed through the top 34 for access to the storage compartments 16, 18 and 20, respectively. Cylindrical necks 54, 56 and 58 surround the respective openings 48, 50 and 52, the upper portion of the necks 54, 56 and 58 including threads 60 for receiving caps (not shown) for closing the storage compartments 16, 18 and 20. Each of the necks 54, 56 and 58 also includes annular collars 62. The collars 62 are spaced a predetermined distance from the bottom member 14 when the cartridge 10 is assembled as shown in Figure 1. The collars 62 together define a plane that is parallel to the top 34 and that lies between the top 34 and the threads 60 on each of the necks 54, 56 and 58.

A detent member 64 (Figures 1 and 3) is formed on the top 34. The detent member 64 comprises vertical walls 66 projecting upwardly from the top 34 together defining a rectangular body aligned with the necks 54, 56 and 58. The detent member 64 includes flanges 68 and 70 which project outwardly from the walls 66 generally toward the wall members 30 and 32 and in the same plane as the annular collars 62. Each of the flanges 68 and 70 includes a portion 72 which slopes downardly away from the neck 58 and from the plane defined by the annular collars 62 toward the top 34. Each portion 72 terminates in a tooth 74 which returns to the plane defined by the annular collars 62.

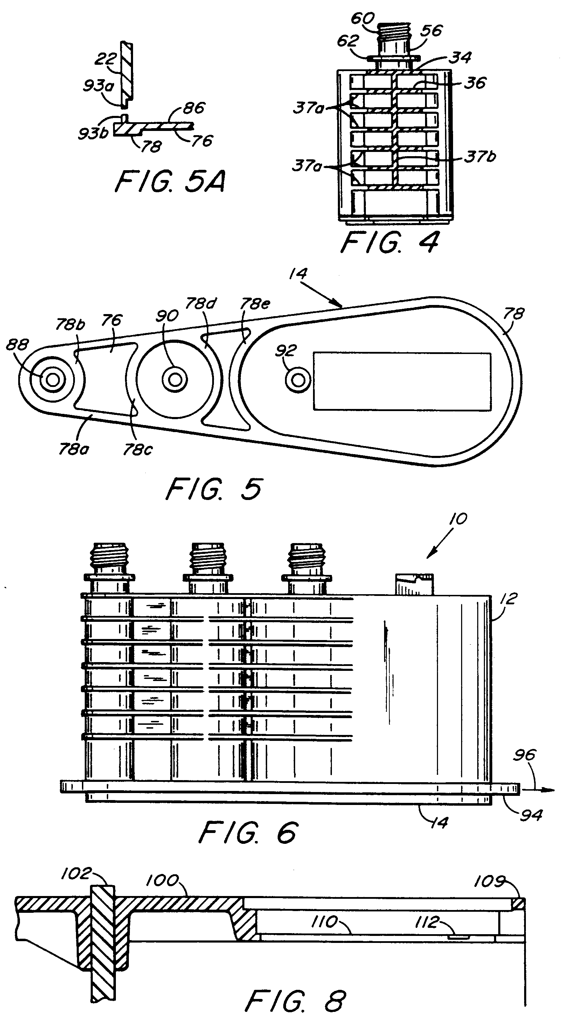

Turning now to Figures 2 and 5, a lower surface 76 of the bottom member 14 includes a raised boss 78. The raised boss 78 includes a peripheral portion 78a extending about the periphery of the bottom-member 14 and arcuate portions 78b-78e all of which are opposite the sidewalls 22-32 when the body 12 and bottom member 14 are assembled. Depressions 80, 82 and 84 (Figures 2 and 3) are formed into an upper surface 86 of the bottom member 14, producing corresponding protrusions 88, 90 and 92, respectively, on the lower surface 76. When the body 12 and the bottom member 14 are assembled as described below, the depressions 80, 82 and 84 are coaxially aligned with the openings 48, 50 and 52 and the corresponding necks 54, 56 and 58.

The bottom edge of each of the sidewalls 22-32 includes a protruding ridge 93a as illustrated with respect to the sidewall 22 in Figure 5A. The upper surface 86 of the bottom member 14 includes corresponding protruding ridges 93b adapted to align with the ridges 93a when the body 12 and bottom member 14 are assembled as described hereinbelow.

To assemble the reagent cartridge 10, the body 12 and bottom member 14 are pressed against a plate 94 (Figure 6) which is heated to a temperature sufficient to render plastic and thus fusible the ridges 93a of the body 12 and the corresponding mating ridges 93b on the upper surface 86. The plate 94 is then removed as indicated by the arrow 96 in Figure 6 and the body 12 and bottom member 14 are urged together, welding the body 12 to the bottom member 14. In the embodiment disclosed herein, the body 12 and bottom member 14 are formed by means of injection molding from high density polyethylene material. To prevent the polyethylene material from sticking to the heated plate 94, the plate 94 is coated with a non-stick material marketed under the trademark Teflon, allowing clean removal of the plate 94 and uniformly high quality and reliable welds between the body 12 and the bottom member 14.

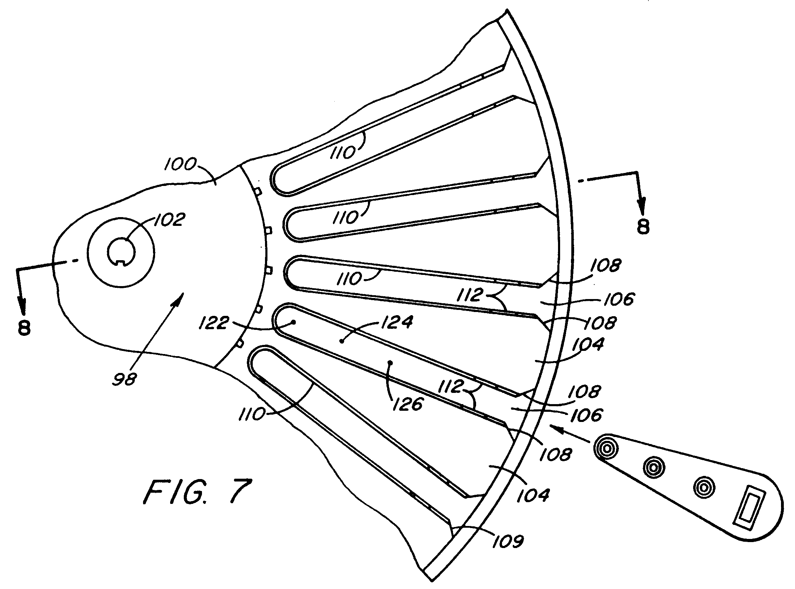

With reference now to Figures 7 and 8, the reagent cartridge 10 may be inserted onto and carried by a reagent cartridge carousel 98. The carousel 98 is rotatably mounted to an automated clinical instrument (not shown) and is preferably automatically rotated to position one of a plurality of reagent cartridges 10 carried by the carousel 98 for the removal of reagents using a probe as is described below. The carousel 98 includes a central hub 100 which receives a shaft 102 rotatably supported by the automated analyzer. For example, the shaft 102 may be rotated by means of a stepper motor under the control of a microprocessor-based computer system which controls the operation of the analyzer. The hub 100 supports a plurality of radial fingers 104 which in turn define a plurality of slots 106 disposed radially about the hub 100. The side walls of each of the slots 106 expand outwardly near the periphery of the carousel 98 to define tapered openings 108. A peripheral reinforcing member 109 is formed about the outer edge of the carousel 98 to add rigidity to the carousel 98. The reinforcing member 109 is above the tapered openings 108 as seen in Figure 8 to provide a clear path for insertion and removal of the reagent cartridge 10 as is described below. Each of the slots 106 includes an internal shoulder 110. Depressions 112 are formed into the shoulder 110 proximate the periphery of the carousel 98.

As will now be described, a plurality of cartridges 10 may be inserted onto and carried by the carousel 98. In the embodiment disclosed herein, the carousel 98 may be disposed in a refrigerated environment to maintain the reagents stored in the cartridges 10 at a temperature of about 8 to 10 °C. More particularly, the slots 106 are adapted to receive the necks 54, 56 and 58 and the detent member 64 on the top 34 of the reagent cartridge 10. The storage compartment 16 at the narrow end of the cartridge 10 is inserted first into one of the slots 106 and the annular collars 62 and flanges 68 and 70 rest upon and are supported by the shoulder 110 in the slot 106. With the reagent cartridge 10 fully inserted into the slot 106, the portions 72 of the detent member 64 come to rest in the notches 112 and the teeth 74 rest against the edge of the notches 112 nearest the periphery of the carousel 98. In this fashion, the cartridge 10 is retained on the carousel 98 and the carousel 98 may be rotated by the shaft 102 without displacing the cartridge 10 by centrifugal force. Furthermore, the combination of the shoulder 110 and the collars 62 along with the notches 112 and teeth 74 serve to position the cartridge accurately on the carousel 98 for positive and repeatable access by a reagent removal probe.

As seen with reference to Figure 3, such a reagent removal probe 120 is carried by an automated crane well known in the art (not shown) which positions the probe 120 over predetermined probe insertion locations 122, 124 and 126. The insertion locations 122, 124 and 126 are generally coaxially aligned with the necks 54, 56 and 58 when a cartridge 10 is installed on the carousel 98 as just described and the carousel 98 is rotated to a reagent removal position for the cartridge 10. The automated crane also lowers the probe 120 at any one of the locations 122, 124 and 126 to a predetermined insertion depth D with respect to the shoulder 110 shown in phantom in Figure 3. Thus, the shoulder 110 and the collars 62 along with the notches 112 and teeth 74 repeatably and precisely align the cartridges 10 with respect to the probe insertion locations 122, 124 and 126 and the insertion depth D. Accordingly, probe insertion will not result in collisions between the probe 120 and the top of the cartridge 10 nor will the tip of the probe 120 impact the bottom of the cartridge 110, clear advantages in the automated clinical chemistry analyzer art.

Conveniently, to remove the cartridge 10 from the carousel 98, the storage compartment 20 is grasped and the cartridge 10 is raised slightly, disengaging the portions 72 and teeth 74 from the notches 112, enabling the cartridge 10 to be easily radially removed from the slot 106 within the carousel 98.

Thus, the reagent cartridge of the present invention holds a plurality of reagents in compartments which do not share common walls, decreasing the likelihood of reagent migration and contamination and thus increasing shelf life and long-term reagent stability. The cartridge 10 of the present invention can be easily placed onto a reagent cartridge carousel yet is firmly retained by the carousel until the cartridge 10 is ready for removal. The collars 62 and teeth 74 provide a precise indexing means for the cartridge, allowing reagent probes to be inserted into the cartridge with no risk of collision between the probe tip and the top or bottom of the cartridge. Furthermore, the bottom member 14 of the cartridge 10 includes depressions 80, 82 and 84 which provide an additional margin of safety for the reagent probe and enable the reagent cartridge to deliver more usable reagent to the automated analyzer.

It is to be recognized that the scope the present invention is not to be limited to the particular embodiment disclosed herein but is to be defined only in accordance with the appended claims.

## Claims

1. A reagent cartridge, comprising a plurality of storage compartments (16, 18, 20) and connecting members (14, 34, 36, 40, 42) holding the storage compartments in a fixed relationship with respect to each other and separating the walls of the compartments from each other *characterized in that* the cartridge has a bottom wall (14), and the cartridge includes access openings (48, 50, 52) for each of the storage compartments, and a plurality of corresponding necks (54, 56, 58) extending upwardly from the storage compartments, and support means (62, 68, 70) provided in a support plane extending above the top of the storage compartments and within the extent of the necks, said plane being defined a predetermined distance from the bottom wall, the support means being adapted to cooperate slidingly with suspension means (110) external to the cartridge thereby to suspend the cartridge.

2. A reagent cartridge (10) as claimed in claim 1 including tooth means (74) associated with the cartridge for engaging the suspension means whereby the cartridge may be held in a predetermined position.

3. A reagent cartridge as claimed in claim 1 or claim 2 wherein there are a plurality of separate storage compartments in fixed rigid relationship relative to each other, each storage compartment having upwardly directed walls (22, 24, 26, 28, 30, 32), the upwardly directed walls of each compartment being different to the upwardly directed walls of other compartments.

4. A reagent cartridge as claimed in claims 1 or 3 wherein each compartment has the support means formed from an upstanding neck (54, 56, 58), the neck extending beyond the support plane.

5. A reagent cartridge as claimed in any one of claims 1 to 4 wherein the reagent cartridge has a top wall comprising a member (34) formed integrally with the top wall of each compartment so as to hold the storage compartments in a fixed relationship and separating the respective storage compartment walls.

6. A reagent cartridge as claimed in any one of claims 1 to 5 wherein the bottom wall for the reagent cartridge comprises a member formed integrally with the bottom wall of each compartment so as to hold the storage compartments in a fixed relationship.

7. A reagent cartridge as claimed in any one of claims 1 to 6 wherein the compartments are of different volumes relative to each other, and the support means are non-movably located relative to the cartridge.

8. A reagent cartridge as claimed in any one of claims 1 to 7 wherein the cartridge is wedge-shaped.

9. A reagent cartridge as claimed in any one of the preceding claims wherein at least one of the compartments contains a reagent.

10. A method of making the reagent cartridge as claimed in any one of claims 1 to 8 for use in a clinical instrument, comprising the steps of:
forming a body (12) of the reagent cartridge from a thermo plastic including all but one essentially flat wall of the reagent cartridge;
forming a closing member (14) of the reagent cartridge from a thermo plastic, the closing member including essentially flat surfaces adapted to be welded to the body (12) to form the complete reagent cartridge;
pressing the body (12) and closing member (14) against a plate (94) heated to an elevated temperature to render plastic the portions of the body and closing member in contact with the plate;
removing the plate (94); and
pressing the heated portions of the body (12) and closing member (14) together to form a weld therebetween.

11. A clinical instrument comprising a reagent cartridge storage apparatus (98) including parallel rails adapted to support the reagent cartridge as claimed in any one of claims 1 to 9.

12. A clinical instrument according to claim 11 wherein said rails are adapted to receive a projecting tooth (74) on the support means for retaining the reagent cartridge.

13. A method of mounting a reagent cartridge according to claims 1 to 9 on a reagent cartridge carousel (98) of a clinical instrument according to claim 11 *characterized by* sliding the cartridge into suspension means on the carousel whereby the cartridge is maintained in a suspended manner.

14. A method as claimed in claim 13 wherein the suspension means includes parallel rails positioned on opposite sides of the support means.

15. A method as claimed in either one of claims 13 or 14 wherein said suspension means is in the form of radial fingers (104) supported on a hub (100) of the reagent cartridge carousel (98), the fingers defining a slot.

16. A method as claimed in any one of claims 13 to 15 including locating the carousel containing a cartridge of claims 1 to 9 in a refrigerated environment.

17. A method as claimed in any one of claims 13 to 16 wherein the sliding action includes engaging means for retaining the cartridge positively on the carousel by the suspension means where the carousel is rotated.

18. A method as claimed in any one of claims 13 to 17 including positioning the cartridge so as to receive a probe (120) for selective insertion into selective compartments of the cartridge, the compartments selectively having reagents, by rotating the carousel to predetermined positions, for removing the reagent from selective compartments through the probe.

19. A method as claimed in claim 18 wherein the cartridge is mounted so as to allow access by a crane for selectively raising and lowering the probe to a predetermined insertion depth within compartments of the cartridge.

20. A method as claimed in any one of the claims 17 to 19 wherein removal of the cartridge from the carousel includes raising the cartridge from the suspending position, disengaging the retaining means and radially removing the cartridge from the suspension means in the carousel.

## Patentansprüche

1. Reagens-Kartusche bzw. -Magazin, umfassend eine Mehrzahl von Speicher- bzw. Vorrats-Abteilen bzw. -kammern (16,18,20) und verbindungsteile (14,34,36,40,42), welche die Speicherkammern in einer fixierten Beziehung relativ zueinander halten und die Wandungen der Abteile bzw. Kammern voneinander trennen,
dadurch **gekennzeichnet,**
daß die Kartusche eine Bodenwandung (14)
besitzt und Zugangsöffnungen (48,50,52) zu jeder der Speicherkammern umfast, sowie eine Mehrzahl entsprechender sich von den speicherkammern nach oben erstreckender Kragen (54,56,58) sowie Halterungsmittel (62,68,70), die in einer sich oberhalb der Oberseite der Speicherkammern und innerhalb des Bereichs der Kragen erstreckenden Halterungsebene angeordnet sind, wobei diese Ebene in einem vorgegebenen Abstand von der Bodenwandung definiert ist und die Halterungsmittel zum Gleiteingriff mit außerhalb der Kartusche angeordneten Aufhängungsmitteln (110) zur Aufhängung der Kartusche ausgebildet sind.

2. Reagens-Kartusche (10) nach Anspruch 1, umfassend mit der Kartusche verbundene Zahnmittel (74) zum Eingriff mit den Aufhängungsmitteln, derart daß die Kartusche in einer vorgegebenen Stellung gehalten werden kann.

3. Reagens-Kartusche nach Anspruch 1 oder Anspruch 2, bei welcher eine Mehrzahl getrennter Speicherabteile bzw. -kammern in fixierter starrer Beziehung relativ miteinander vorgesehen sind, wobei jeweils jede Speicherkammer aufwärts gerichtete Wandungen (22,24,26,28,30,32) aufweist und die aufwärts gerichteten Wandungen jeder Kammer von den aufwärts gerichteten Wandungen der anderen Kammern verschieden sind.

4. Reagens-Kartusche nach Anspruch 1 oder Anspruch 3, bei welcher jeweils jede Kammer die Halterungsmittel an einem aufrecht stehenden Kragen (54,56,58) angeformt aufweist, welcher sich über die Halterungsebene erstreckt.

5. Reagens-Kartusche nach einem der Ansprüche 1 bis 4, bei welcher die Reagens-Kartusche eine obere oder Deckenwandung besitzt, welche ein einstückig mit der oberen Wandung jeder Kammer so ausgebildetes Teil (34) umfaßt, daß die Speicherkammern in einer festen Relativbeziehung gehalten und die betreffenden Speicherkammerwandungen voneinander getrennt werden.

6. Reagens-Kartusche nach einem der Ansprüche 1 bis 5, bei welcher die Bodenwandung für die Reagenskartusche ein einstückig mit der Bodenwandung jeder Kammer so ausgebildetes Teil aufweist, daß es die Speicherkammern in einer festen Relativbeziehung zueinander hält.

7. Reagens-Kartusche nach einem der Ansprüche 1 bis 6, bei welcher die Abteile bzw. Kammern relativ bezüglich einander unterschiedliche Volumina besitzen und die Halterungsmittel bezüglich der Kartusche nicht-beweglich angeordnet sind.

8. Reagens-Kartusche nach einem der Ansprüche 1 bis 7, bei welcher die Kartusche keilförmig ausgebildet ist.

9. Reagens-Kartusche nach einem der vorhergehenden Ansprüche, bei welcher wenigstens eine der Kammern ein Reagens enthält.

10. Verfahren zur Herstellung der Reagens-Kartusche gemäß einem der Ansprüche 1 bis 8 zur Verwendung in einem klinischen Instrument, umfassend die Schritte:
- Ausbilden eines Körpers bzw. Korpus (12) der Reagens-Kartusche aus einem thermoplastischen Material, der sämtliche Wandungen mit Ausnahme einer im wesentlichen ebenen Wandung der Reagenskartusche umfaßt;
- Ausbildung eines Verschlußteils (14) der Reagens-Kartusche aus einem thermoplastischen Material, wobei das Verschlußteil im wesentlichen ebene Oberflächen zum Verschweißen mit dem Korpus (12) aufweist, zur Herstellung der vollständigen Reagens-Kartusche;
- Anpressen des Korpus (12) und des Verschlußteils (14) gegen eine auf eine erhöhte Temperatur erhitzte Platte (94), um die in Berührung mit der Platte stehenden Bereiche des Korpus und des Verschlußteils plastisch zu erweichen;
- Entfernen der Platte (94); sowie
- Zusammenpressen der erhitzten Bereiche des Korpus (12) und des Verschlußteils (14) gegeneinander, zur Herstellung einer Schweißverbindung zwischen ihnen.

11. Klinisches Instrument mit einer Reagens-Kartuschen-Speicherapparatur (98), welche zur Halterung der Reagens-Kartusche gemaß einem der Ansprüche 1 bis 9 ausgebildete parallele Schienen umfaßt.

12. Klinisches Instrument nach Anspruch 11, bei welchem die genannten Schienen zur Aufnahme eines vorstehenden Zahns (74) an den Halterungsmitteln zur Festhaltung der Reagens-kartusche ausgebildet sind.

13. Verfahren zum Anbringen einer Reagenskartusche nach einem der Ansprüche 1 bis 9 an einem Reagenskartuschenkarussell bzw. -drehteller (98) eines klininischen Instruments gemäß Anspruch 11,
dadurch **gekennzeichnet,**
daß die Kartusche gleitend in Aufhängungsmittel an dem Karussell eingeführt wird, derart daß die Kartusche in Aufhängung gehalten wird.

14. Verfahren nach Anspruch 13, bei welchem die Aufhängmittel parallele Schienen umfassen, die an gegenüberliegenden Seiten der Halterungsmittel angeordnet sind.

15. Verfahren nach einem der Ansprüche 13 oder 14, bei welchem die Aufhängungsmittel in Form radialer Finger (104) ausgebildet sind, die an einer Nabe (100) des Reagenzkartuschenkarussells (98) angebracht sind und einen Schlitz definieren.

16. Verfahren nach einem der Ansprüche 13 bis 15, umfassend die Einbringung des eine Kartusche gemäß den Ansprüchen 1 bis 9 enthaltenden Karussells in eine gekühlte Umgebung.

17. Verfahren nach einem der Ansprüche 13 bis 16, bei welchem die Gleiteinführung Eingriffsmittel zur positiven Festhaltung der Kartusche an dem Karussell durch die Aufhängungsmittel bei einer Rotation des Karussells umfaßt.

18. Verfahren nach einem der Ansprüche 13 bis 17, umfassend die Positionierung der Kartusche zur Aufnahme einer Sonde (120) zur selektiven Einführung in ausgewählte, selektive Reagenzien enthaltende Kammern der Kartusche durch Rotation des Karussells in vorgegebene Stellungen, zur Entnahme des Reagens aus ausgewählten Kammern durch die Sonde.

19. Verfahren nach Anspruch 18, bei welchem die Kartusche so angeordnet wird, daß sie durch einen Kran zum selektiven Anheben bzw. Herablassen der Sonde in eine vorgegebene Einfuhrtiefe in Kammern der Kartusche zugänglich ist.

20. Verfahren nach einem der Ansprüche 17 bis 19, bei welchem die Entnahme der Kartusche aus dem Karussell das Anheben der Kartusche aus der Aufhängungsstellung, die Lösung der Halterungsmittel und die radiale Entnahme der Kartusche aus der Aufhängungsvorrichtung in dem Karussell umfaßt.

## Revendications

1. Cartouche de réactif comprenant une pluralité de compartiments de stockage (16, 18, 20) et une pluralité d'éléments de liaison (14, 34, 36, 40, 42) maintenant les compartiments de stockage dans une relation fixe les uns par rapport aux autres et séparant les parois des compartiments les unes des autres, caractérisée en ce que la cartouche comprend une paroi inférieure (14), des ouvertures d'accès (48, 50, 52) pour chacun des compartiments de stockage, et une pluralité de cols correspondants (54, 56, 58) s'étendant vers le haut à partir des compartiments de stockage, et des moyens de support (62, 68, 70) prévus dans un plan de support s'étendant au-dessus du sommet des compartiments de stockage et dans les limites de l'extension des cols, ledit plan étant défini à une distance prédéterminée de la paroi inférieure, les moyens de support étant adaptés pour coopérer de manière glissante avec des moyens de suspension (110) externes à la cartouche, pour suspendre la cartouche.

2. Cartouche de réactif (10) selon la revendication 1, caractérisée en ce qu'elle comporte des moyens en forme de dents (74) associés à la cartouche pour venir en prise avec les moyens de suspension par lesquels la cartouche peut être maintenue dans une position prédéterminée.

3. Cartouche de réactif selon la revendication 1 ou 2, caractérisée en ce qu'elle comporte une pluralité de compartiments de stockage séparés en relation fixe et rigide les uns par rapport aux autres, chaque compartiment de stockage ayant des parois orientées vers le haut (22, 24, 26, 28, 30, 32), les parois orientées vers le haut de chaque compartiment étant différentes des parois orientées vers le haut des autres compartiments.

4. Cartouche de réactif selon la revendication 1 ou 3, caractérisée en ce que chaque compartiment a les moyens de support formés à partir d'un col droit (54, 56, 58), le col s'étendant au-delà du plan de support.

5. Cartouche de réactif selon l'une quelconque des revendications 1 à 4, caractérisée en ce que la cartouche de réactif comporte une paroi supérieure comprenant un élément (34) formé monobloc avec la paroi supérieure de chaque compartiment de manière à maintenir les compartiments de stockage dans une relation fixe et séparer les parois de compartiment de stockage respectives.

6. Cartouche de réactif selon l'une quelconque des revendications 1 à 5, caractérisée en ce que la paroi inférieure de la cartouche réactive comprend un élément formé monobloc avec la paroi inférieure de chaque compartiment de manière à maintenir les compartiments de stockage dans une relation fixe.

7. Cartouche de réactif selon l'une quelconque des revendications 1 à 6, caractérisée en ce que les compartiments présentent des volumes différents les uns par rapport aux autres, et que les moyens de support sont disposés par rapport à la cartouche de manière non mobile.

8. Cartouche de réactif selon l'une quelconque des revendications 1 à 7, caractérisée en ce que la cartouche est en forme de coin.

9. Cartouche de réactif selon l'une quelconque des revendications précédentes, caractérisée en ce qu'au moins l'un des compartiments contient un réactif.

10. Procédé de fabrication de la cartouche de réactif selon l'une quelconque des revendications 1 à 8 pour l'utilisation dans un instrument clinique, comprenant les étapes consistant :
à former un corps (12) de la cartouche de réactif à partir d'une matière thermoplastique comprenant toutes les parois de la cartouche de réactif sauf une qui est essentiellement plate,
à former un élément de fermeture (14) de la cartouche de réactif à partir d'une matière thermoplastique, l'élément de fermeture comprenant des surfaces essentiellement plates aptes à être soudées au corps (12) pour former la cartouche de réactif terminée,
à comprimer le corps (12) et l'élément de fermeture (14) contre une plaque (94) chauffée à une température élevée pour rendre plastiques les portions du corps et de l'élément de fermeture en contact avec la plaque,
à retirer la plaque (94), et
à comprimer les portions chauffées du corps (12) et de l'élément de fermeture (14) ensembles pour former une soudure entre elles.

11. Instrument clinique comportant un appareil de stockage de cartouche de réactif (98) comprenant des rails parallèles aptes à supporter la cartouche de réactif selon l'une quelconque des revendications 1 à 9.

12. Instrument clinique selon la revendication 11, caractérisé en ce que lesdits rails sont aptes à recevoir une dent saillante (74) sur les moyens de supports pour retenir la cartouche de réactif.

13. Procédé de montage d'une cartouche de réactif selon les revendications 1 à 9, sur un carrousel de cartouche de réactif (98) d'un instrument clinique selon la revendication 11, caractérisé en ce qu'il consiste à glisser la cartouche dans les moyens de suspension sur le carrousel, pour maintenir la cartouche d'une manière suspendue.

14. Procédé selon la revendication 13, caractérisé en ce que les moyens de suspension comportent des rails parallèles disposés sur les côtés opposés des moyens de support.

15. Procédé selon l'une quelconque des revendications 13 et 14, caractérisé en ce que lesdits moyens de suspension présentent la forme de doigts radiaux (104) supportés sur un moyeu (100) du carrousel de cartouche de réactif (98), les doigts définissant une fente.

16. Procédé selon l'une quelconque des revendications 13 à 15, caractérisé en ce qu'il consiste à disposer le carrousel qui contient une cartouche selon les revendications 1 à 9 dans un milieu réfrigéré.

17. Procédé selon l'une quelconque des revendications 13 à 16, caractérisé en ce que l'étape de glissement consiste notamment à mettre en prise des moyens pour retenir positivement la cartouche sur le carrousel avec les moyens de suspension, là où le carrousel est tourné.

18. Procédé selon l'une quelconque des revendications 13 à 17, caractérisé en ce qu'il consiste à positionner la cartouche de manière à recevoir une sonde (120) pour une insertion sélective dans des compartiments sélectifs de la cartouche, les compartiments ayant sélectivement des réactifs, en faisant tourner le carrousel vers des positions prédéterminées, pour retirer le réactif des compartiments sélectifs par l'intermédiaire de la sonde.

19. Procédé selon la revendication 18, caractérisé en ce que la cartouche est montée de manière à permettre l'accès par une grue pour sélectivement monter ou baisser la sonde vers une profondeur d'insertion prédéterminée à l'intérieur des compartiments de la cartouche.

20. Procédé selon l'une quelconque des revendications 17 à 19, caractérisé en ce que l'extraction de la cartouche à partir du carrousel consiste notamment à élever la cartouche à partir de la position suspendue, à désengager les moyens de retenue et à retirer radialement la cartouche des moyens de suspension dans le carrousel.
